# EUROPÄISCHE PATENTSCHRIFT

(11) **EP 0 748 421 B1**
(45) Veröffentlichungstag und Bekanntmachung des Hinweises auf die Patenterteilung: **10.06.1998**
(21) Anmeldenummer: 95910397.9
(22) Anmeldetag: 15.02.1995
(51) Int. Cl.: F16B 3/06, F16D 1/09, F16B 37/14

(54) **SPANNANORDNUNG MIT EINEM KONUSSPANNBOLZEN**
CLAMPING ARRANGEMENT HAVING A TAPERED CLAMPING BOLT
SYSTEME DE SERRAGE POURVU D'UN GOUJON DE SERRAGE CONIQUE

(30) Priorität: 02.03.1994 DE 9403481 U
(43) Veröffentlichungstag der Anmeldung: 18.12.1996
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dr. Dipl.-Phys.
(86) Internationale Anmeldenummer: DE9500190
(87) Internationale Veröffentlichungsnummer: WO9523926

(56) Entgegenhaltungen:
- EP-A- 0 153 487
- DE-A- 1 750 905
- DE-C- 3 536 920
- US-A- 2 755 093

## Beschreibung

Die Erfindung bezieht sich auf eine Bauteilgruppe der dem Oberbegriff des Anspruchs 1 entsprechenden Art.

Ein gattungsgemäßer Stand der Technik in Gestalt einer Flanschverbindung geht aus der US-A 4 279 530 hervor. Bei einer Flanschverbindung ist ein Zugang zu dem die Verbindung herstellenden Konusspannbolzen von dessen beiden Enden her ohne Schwierigkeit möglich. Dadurch sind auch Mittel zum Lösen des bekannten Konusspannbolzens leicht zum Einsatz bringbar, die notwendig sind, wenn der bekannte Konusspannbolzen selbsthemmende Winkel aufweist. Es ist lediglich angegeben, daß solche zusätzlichen Mittel zum Lösen notwendig sind, ohne daß diese weiter erläutert werden.

Der Erfindung liegt die Aufgabe zugrunde, eine solche Bauteilgruppe so auszugestalten, daß sie verspannbar und lösbar ist, wenn sie in eine Sacklochung des ersten Bauteils eingesetzt werden muß, d.h. kein Zugang von dem der Spannseite gegenüberliegenden Ende her zu dem Konusspannbolzen möglich ist.

Diese Aufgabe wird durch die in Anspruch 1 wiedergegebene Erfindung gelöst.

Der Umfangsvorsprung an dem äußeren Bolzenteil und die Gewindebohrung im Grund der Sacklochung wirken beim Verspannen oder beim Lösen zusammen, um die Bolzenteile axial abzustützen bzw. zu beaufschlagen. Bei beiden Vorgängen ist also eine positive Kraftbeaufschlagung möglich, um entweder das Lösen oder das Spannen bewerkstelligen zu können.

Aus der DE-A 1750905 ist eine ebenfalls mit einem Konusspannbolzen verbundene Bauteilgruppe bekannt, bei der der konusspannbolzen in eine sackbohrung eines Bauteils eingreift in deren Grund eine Gewindebohrung vorhanden ist. Allerdings ist keine separate Spannschraube vorhanden, die eine Durchgangsbohrung des inneren Bolzenteils durchgreift, sondern es ist der innere Bolzenteil selbst die spannschranbe, die in die Gewindebohrungeingreift und also gedreht werden muß. Die Verspannung ist bei Selbsthemmendem konnswinkel nicht mehr lösbar.

Eine erste in Betracht kommende Ausführungsform ist Gegenstand des Anspruchs 2. Beim Verspannen bedarf es bei dieser Ausführungsform keiner äußeren Kräfte, d.h. die Gewindebohrung im Grund der Sacklochung wird hier nicht benötigt. Beim Lösen allerdings wird die Löseschraube in diese Gewindebohrung eingeschraubt und drückt den inneren Bolzenteil in die Sacklochung hinein, während der äußere Bolzenteil durch den Umfangsvorsprung festgehalten wird. Dadurch werden die Bolzenteile voneinander getrennt.

Damit der innere Bolzenteil nicht über den Umfangsvorsprung axial vorstehen muß, empfiehlt sich ein Hilfsring gemäß Anspruch 3, mittels dessen die Kraft der Löseschraube in das Innere des äußeren Bolzenteils hinein übertragbar ist.

Eine andere in Betracht kommende Ausführungsform ist Gegenstand des Anspruchs 4. Hierbei ist die Situation umgekehrt: Beim Verspannen wird die Spannschraube in die Gewindebohrung im Grund der Sacklochung eingeschraubt, während beim Lösen die Teile durch die Schraubanordnung getrennt werden, ohne daß es äußerer Kräfte bedarf.

Die Schraubanordnung kann hierbei in einer ersten Variante nach den Ansprüchen 5 und 6 gestaltet sein. Eine andere Variante ist Gegenstand des Anspruchs 7.

Eine wichtige Ausgestaltung der Erfindung ist in Anspruch 8 wiedergegeben. Hierdurch ist es möglich, durch Einschrauben des äußeren Bolzenteils die beiden Bauteile in Achsrichtung gegeneinander zu ziehen. Nach erfolgter axialer Verspannung wird der Konusspannbolzen betätigt, wodurch die Verbindung radial spielfrei gemacht und die Bauteile in dieser Richtung spielfrei aneinander festgelegt werden.

Zum Schutz gegen Korrosion kann sich eine Schutzkappe gemäß Anspruch 9 empfehlen.

In der Zeichnung sind Ausführungsbeispiele der Erfindung in durch die Achse gehenden Längsschnitten dargestellt.
Fig. 1 zeigt eine erste Ausführungsform der Spannanordnung beim Verspannen;
Fig. 2 zeigt den linken Teil von Fig. 1 beim Lösen;

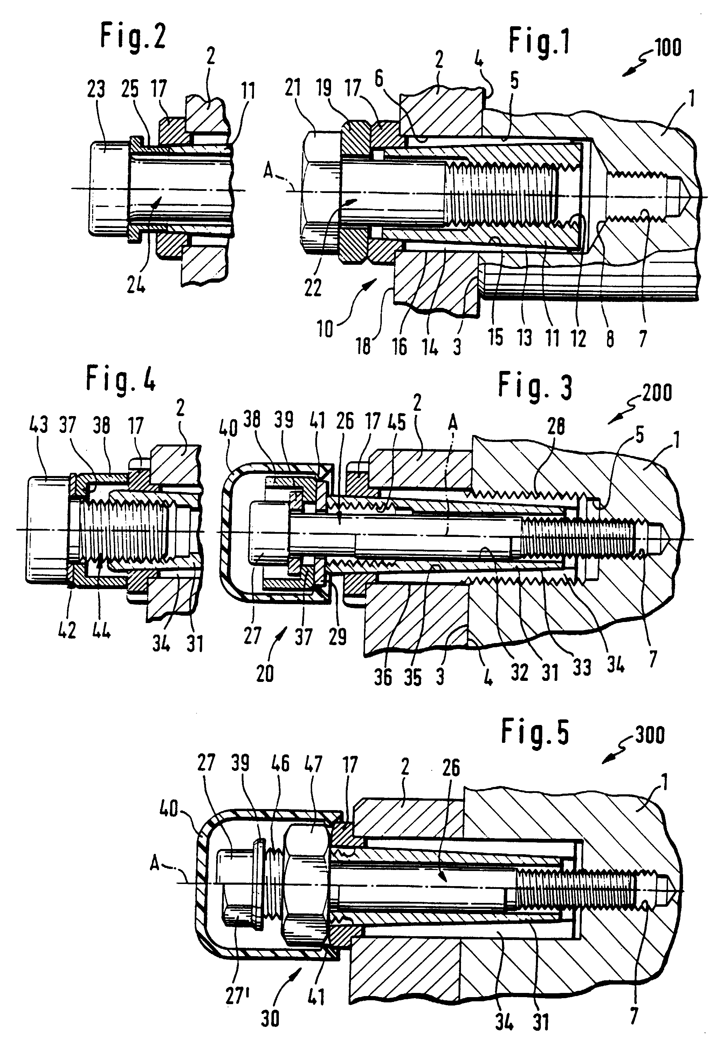

Fig. 2 und 3 zeigen entsprechende Ansichten einer anderen Ausführungsform;
Fig. 5 zeigt eine Fig. 3 entsprechende Ansicht einer weiteren Ausführungsform.

Die in den Fig. 1 und 2 wiedergegebene Bauteilgruppe 100 zeigt die Verbindung eines ersten Bauteils 1, mit einem zweiten Bauteil 2 mit Hilfe eines Konusspannbolzens 10. In dem Ausführungsbeispiel ist das erste Bauteil 1 eine Welle mit senkrecht zur Achse stehender ebener Stirnfläche 3, gegen die die ebene rechte Begrenzungsfläche 4 des Bauteils 2 anliegt. Die Flächen 3,4 müssen jedoch nicht eben sein und brauchen auch nicht aneinander anzuliegen. Ein geringer Abstand, der noch eine ausreichende Spannlänge des Konusspannbolzens 10 beläßt, kann bewältigt werden. Das Bauteil 2 kann z.B. ein vor der Stirnseite 3 der Welle 1 zu befestigender Flansch oder eine solche Platte sein.

Der Konusspannbolzen 10 besitzt eine Achse A. Er greift in eine Sackbohrung 5 des Bauteils 1 ein und durchgreift eine Durchgangsbohrung 6 in dem Bauteil 2. Die Bohrungen 5,6 haben gleichen Durchmesser. Im Grund 8 der Sackbohrung 5 ist eine zu der Achse A koaxiale Gewindebohrung 7 vorgesehen.

Der Konusspannbolzen 10 umfaßt einen inneren Konusteil 11 mit einer zur Achse A koaxialen Gewindebohrung 12 und einer konischen Umfangsfläche 13 mit im Selbsthemmungsbereich liegendem Konuswinkel, beispielsweise 1:12, die sich in Fig. 1 in ihrem Durchmesser von rechts nach links verringert.

Der innere Bolzenteil 11 ist von einem büchsenartigen äußeren Bolzenteil 14 umgeben, der eine innere Konusfläche 15 mit gleichen Konuswinkel wie die Konusfläche 13 aufweist, mit der er auf der Konusfläche 13 anliegt. Die äußere Umfangsfläche 16 ist zylindrisch und hat einen solchen Durchmesser, daß der Konusspannbolzen 10 in unverspanntem Zustand gerade in die Bohrungen 5,6 hineinpaßt.

Der äußere Bolzenteil 14 weist an seinem in Fig. 1 linken Ende einen radialen Umfangsvorsprung 17 auf, der in dem Ausführungsbeispiel als über den Umfang geschlossen durchgehender Umfangsbund ausgebildet ist. Der Umfangsbund liegt mit seiner rechten Stirnseite an der in Fig. 1 linken, d.h. bezüglich der Sacklochung 5 äußeren Begrenzungsfläche 18 des zweiten Bauteils 2 an.

Über einen Zwischenring 19 stützt sich gegen die äußere Stirnfläche des Umfangsvorsprungs 17 der Kopf 21 einer als Ganzes mit 22 bezeichneten Spannschraube ab, die mit ihrem Gewindeteil in die Gewindebohrung 12 des inneren Bolzenteils 11 eingreift.

Der Umfangsvorsprung 17 kann an seinem Außenumfang eine Schlüsselfläche aufweisen, damit beim Anziehen der Spannschraube 22 eine Konterung erfolgen kann. Bei diesem Anziehen wird der innere Bolzenteil 11 von rechts nach links in den äußeren Bolzenteil 14 hineingezogen, wobei die Konusflächen 13,15 aufeinander abgleiten. Dabei weitet sich der äußere Konusteil 14 radial auf und verspannt sich spielfrei in den Bohrungen 5,6. Um die Aufweitung zu erleichtern und nicht soviel Spannkraft der Spannschraube 22 durch Verformung des äußeren Bolzenteils 14 zu verlieren, kann der äußere Bolzenteil 14 bis kurz vor den Umfangsvorsprung 17 längsgeschlitzt sein, wie es durch die fehlende Schraffierung angedeutet ist.

Beim Anziehen der Spannschraube 22 bleiben die axialen Kräfte ganz innerhalb des Konusspannbolzens 10. Der Umfangsvorsprung 17 hat hierbei nur die Funktion eines Anschlages beim Einschieben des Konusspannbolzens 10.

Um die Bauteilgruppe 100 lösen zu können, wird die Spannschraube 22 herausgeschraubt. Die Bolzenteile 11,14 bleiben hierbei wegen des selbsthemmenden Winkels verspannt. Durch die Gewindebohrung 12 wird nun eine Löseschraube 24 entsprechend geringeren Durchmessers hindurchgeführt und mit ihrem Ende in die Gewindebohrung 7 am Grund der Sackbohrung 5 eingeschraubt. Zwischen dem Kopf 23 der Löseschraube 24 und der in Fig. 1 und 2 linken Stirnseite des inneren Bolzenteils 11 ist ein die Lösekräfte übertragender Hilfsring 25 vorgesehen, mittels dessen beim Anziehen der Löseschraube 24 der innere Bolzenteil 11 gemäß den Fig. 1 und 2 nach rechts, d.h. in die Sackbohrung 5 hineinverlagert wird. Es versteht sich, daß die Längen so bemessen sind, daß auf der in Fig. 1 rechten Seite des inneren Bolzenteils 11 genügend Platz für die Verlagerung bleibt.

Beim Lösen wird der innere Bolzenteil 11 nach rechts gezogen und der äußere Bolzenteil 14 über den Umfangsvorsprung 17 festgehalten. Der Umfangsvorsprung 17 hat bei der Spannanordnung 100 also im Lösefall eine die Lösekräfte übertragende Funktion.

Soweit bei den weiteren Bauteilgruppen entsprechende Teile vorhanden sind, sind gleiche Bezugszahlen verwendet.

Bei der Bauteilgruppe 200 umfaßt der Konusspannbolzen 20 einen inneren Bolzenteil 31 mit einer zu der Achse A koaxialen Durchgangsbohrung 32. Die konische Außenumfangsfläche 33 mit im Selbsthemmungsbereich liegendem Konuswinkel wirkt mit der konischen Innenumfangsfläche 35 eines büchsenartigen äußeren Bolzenteils 34 zusammen, der einen im wesentlichen zylindrischen Außenumfang 36, der in die Durchgangsbohrung 6 des Bauteils 2 paßt sowie in dem in das Bauteil 1 eingreifenden Bereich ein Außengewinde 28 aufweist, welches in ein entsprechendes Innengewinde in der Sackbohrung 5 eingreift.

An dem in Fig. 3 und 4 linken Ende besitzt der äußere Bolzenteil 34 wieder einen Umfangsvorsprung 17, der in seiner Funktion dem Umfangsvorsprung 17 der Fig. 1 und 2 entspricht und am Außenumfang für den Angriff eines Hakenschlüssels gestaltet ist.

Der innere Bolzenteil 31 steht in dem Ausführungsbeispiel gemäß den Fig. 3 und 4 axial nach links über den Umfangsvorsprung 17 etwas vor. Vor dem stirnseitigen Ende des inneren Bolzenteils 31 ist ein Zwischenring 29 vorgesehen, gegen den die Stirnseite des Innenbundes 37, des Hilfsrings 38 anliegt. Gegen die gegenüberliegende Begrenzung des Innenbundes 37 wirkt eine Unterlegscheibe 39, die sich am Kopf 27 der Spannschraube 26 abstützt. Beim Anziehen der Spannschraube 26 wird der innere Bolzenteil 31 über die Teile 39,37,29 nach rechts in den äußeren Bolzenteil 34 hineingetrieben, wobei der äußere Bolzenteil 34 durch den Umfangsvorsprung 17 an der gemäß Fig. 3 linken Begrenzung des Bauteils 2 festgehalten wird.

Bei dieser Ausführungsform bildet also der Umfangsvorsprung 17 das Widerlager gegen die axialen Kräfte der Spannschraube 26 beim Spannen.

Zum Lösen der Bauteilgruppe 200 wird die Spannschraube 26 herausgedreht und stattdessen in ein Innengewinde 45 des inneren Bolzenteils 31, welches die Durchgangsbohrung 32 an Durchmesser übertrifft und an dem den größeren Durchmesser der konischen Umfangsfläche 33 aufweisenden Ende desselben angebracht ist, eine Löseschraube 44 eingeschraubt, die einen größeren Durchmesser hat als die Spannschraube 26. Der Hilfsring 38 wird gegenüber der Spannstellung, in der er lediglich bereitgehalten wird, aber keine eigentliche Funktion hat, herumgedreht und in die aus Fig. 4 ersichtliche Position gebracht. Der Kopf 43 der Löseschraube 44 wirkt über eine Unterlegscheibe 42 gegen das den Innenbund 37 aufweisende Ende des Hilfsrings 38. Beim Anziehen der Löseschraube 44 wird der innere Konusteil 31 gemäß Fig. 4 nach links aus dem äußeren Konusteil 34 herausgezogen und somit gelöst.

Zum Schutz der über den Umfangsvorsprung 17 gemäß Fig. 3 nach links herausstehenden Teile des Konusspannbolzens 20 ist eine topfförmige Kappe 40 aus einem geeigneten Kunststoff vorgesehen, die mit einer inneren Umfangsrippe 41 hinter die über die Unterlegscheibe 29 radial etwas vorstehende rechte äußere Umfangskante des Hilfsrings 38 greift.

Bei der Bauteilgruppe 300 der Fig. 5 ist die Funktion die gleiche wie bei der Bauteilgruppe 200 mit dem Unterschied, daß der innere Bolzenteil 31 axial außerhalb des Umfangsvorsprungs 17 auf seinem Außenumfang ein Außengewinde 46 aufweist, auf welches eine Mutter 47 aufschraubbar ist, die sich unmittelbar gegen die in Fig. 5 linke Begrenzungsfläche des Umfangsvorsprungs 17 legt und beim Anziehen den inneren Bolzenteil 31 aus dem äußeren Bolzenteil 34 gemäß Fig. 5 nach links herauszieht. Die Kräfte verbleiben beim Lösen ganz innerhalb des Konusspannbolzens 30. Der Umfangsvorsprung 17 und die Gewindebohrung 7 wirken nur beim Spannen der Spannanordnung 300 zusammen.

Die innere Umfangsrippe 41 der topfförmigen Kappe 40 greift in diesem Ausführungsbeispiel hinter den rechten Rand der Mutter 47.

In Fig. 5 ist noch angedeutet, daß statt eines Kopfes 27 mit Innensechskant auch eine Schraube mit einem Kopf 27' mit Außensechskant verwendet werden kann.

## Patentansprüche

1. Bauteilgruppe mit einem ersten Bauteil (1), einem zweiten Bauteil und einem in fluchtende Bohrungen (5,6) der Bauteile (1,2) eingreifenden, die Bauteile (1,2) spielfrei verbindenden Konusspannbolzen (10,20,30),
mit einem inneren Bolzenteil (11,31)) mit einer zentralen Durchgangsbohrung (12,32) und dazu konzentrischer konischer Außenumfangsfläche (13,33) mit im Selbsthemmungsbereich liegendem Konuswinkel,
mit einem büchsenartigen äußeren Bolzenteil (14,34) mit zylindrischer, gerade in die Bohrungen (5,6) hineinpassender Außenumfangsfläche (16,36) und konischer Innenumfangsfläche (15,35) gleichen Konuswinkels, die zum Zusammenwirken mit der konischen Außenumfangsfläche (13,33) des inneren Bolzenteils (11,31) bestimmt ist,
und mit einer in die Durchgangsbohrung (12,32) von einem Ende des Konusspannbolzens (10,20,30) her eingreifenden Spannschraube (22,26) mit einem Kopf zur Abstützung gegen das benachbarte Ende eines der Bolzenteile, mittels derer die Bolzenteile (11,14;31,34) unter Abgleiten über die Konusflächen (13,15;33,35) axial unter radialer Aufweitung des äußeren Bolzenteils (11,34) gegeneinander verlagerbar sind,
**dadurch gekennzeichnet,**
daß der äußere Bolzenteil (14,34) auf der Seite des Kopfes (21,27) der Spannschraube (22,26) einen radialen Umfangsvorsprung (17) trägt, der axial gegen die Außenseite des zweiten Bauteils (2) anliegt, während das andere Ende des äußeren Bolzenteils (14,34) durchgehend zylindrisch mit einem dem Durchmesser der als Sackbohrung (5) ausgebildeten Bohrung in dem ersten Bauteil (1) ist, und im Grund (8) der Bohrung (5) eine koaxiale Gewindebohrung (7) geringeren Durchmessers für eine durch die Durchgangsbohrung (12,32) des inneren Bolzenteils hindurchführbare Schraube (24,26) vorgesehen ist.

2. Bauteilgruppe nach Anspruch 1, **dadurch gekennzeichnet,**
daß der Umfangsvorsprung (17) an dem den geringeren Durchmesser der konischen Innenumfangsfläche (13) aufweisenden Ende des äußeren Bolzenteils (14) angeordnet ist und die Spannschraube (22) zum Spannen axial von außen gegen den Umfangsvorsprung (17) anliegt.
daß zum Lösen einer einen Kopf (23) aufweisende Löseschraube (24) von geringerem Durchmeser als die Spannschraube (22) vorgesehen und die Gewindebohrung (7) im Grund der Sackbohrung (5) für die Löseschraube (24) bestimmt ist
und daß sich die Löseschraube (24) axial von außen gegen die Stirnseite des inneren Bolzenteils (11) abstützt.

3. Bauteilgruppe nach Anspruch 2, **dadurch gekennzeichnet**, daß ein in das den geringen Durchmesser der konischen Innenumfangsfläche (15) aufweisende Ende des büchsenartigen äußeren Bolzenteils (14) eingreifender, sich vor die Stirnseite des inneren Bolzenteils (11) legender Hilfsring (25) vorgesehen ist, gegen den sich die Löseschraube (24) axial von außen mit ihrem Kopf (23) anlegt.

4. Bauteilgruppe nach Anspruch 1, **dadurch gekennzeichnet,**
daß der äußere Bolzenteil (34) an dem den größeren Durchmesser der konischen Innenumfangsfläche (35) aufweisenden Ende einen radialen Umfangsvorsprung (17) trägt, der gegen die Außenseite des zweiten Bauteils (2) anliegt,
daß zum Spannen die Spannschraube (26) den inneren Bolzenteil (34) in einer axialen Durchgangsbohrung durchgreift und die Gewindebohrung (7) im Grund der Sacklochung (5) für die Spannschraube (26) bestimmt ist und sich die Spannschraube (26) mit ihrem Kopf (27) gegen die Stirnseite des inneren Konusteils (31) abstützt
und daß zum Lösen eine Schraubanordnung vorgesehen ist, die ein Gewinde (45,46) an dem inneren Konusteil (31) und ein Schraubteil (44,47) umfaßt, das sich gegen den Umfangsvorsprung (17) axial von außen abstützt.

5. Bauteilgruppe nach Anspruch 4, **dadurch gekennzeichnet**,daß die Schraubanordnung ein Innengewinde (45) und eine in dieses eingreifende Löseschraube (44) umfaßt.

6. Bauteilgruppe nach Anspruch 5, **dadurch gekennzeichnet**, daß ein Hilfsring (38) mit einem Innenbund (37) an einem Ende vorgesehen ist, dessen Ringdurchmesser den Außendurchmesser des inneren Bolzenteils (31) an dessen äußeren Ende und dessen Innenbunddurchmesser den Durchmesser des Spannschraubenschaftes gerade übersteigen.

7. Bauteilgruppe nach Anspruch 4 oder 6, **dadurch gekennzeichnet,** daß sich der innere Bolzenteil (31) axial bis außerhalb des Umfangsvorsprungs (17) des äußeren Bolzenteils (34) fortsetzt und die Schraubanordnung ein dort angebrachtes Außengewinde (46) mit einer Mutter (47) umfaßt, die sich gegen den Umfangsvorsprung (17) axial von außen abstützt.

8. Bauteilgruppe nach einem der Ansprüche 1 bis 7, **dadurch gekennzeichnet**, daß der äußere Bolzenteil (14,34) an seinem Außenumfang ein Außengewinde (28) trägt, welches in ein Innengewinde in der Sackbohrung (5) des ersten Bauteils (1) eingreift.

9. Bauteilgruppe nach einem der Ansprüche 1 bis 8, **dadurch gekennzeichnet**, daß eine topfförmige Schutzkappe (40) vorgesehen ist, die die aus dem Umfangsvorsprung (17) axial herausstehenden Teile des Konusspannbolzens (10,20,30) dicht überdeckt und an ihrem Rand mittels einer Schnappverbindung an dem Konusspannbolzen (10,20,30) festlegbar ist.

## Claims

1. Assembly of components with a first component (1) a second component and a conical clamping bolt (10, 20, 30) engaging aligned bores (5, 6) in the components (1, 2) and clamping the components (1, 2) together without play,
with an inner bolt portion (11, 31) having a central bore (12, 32) through it, and conical external surface (13, 33) concentric with the bore and having a cone angle lying in the self-jamming range,
with a bush-like outer bolt portion (13, 34) with cylindrical outer surface (16, 36) fitting exactly the bores (5, 6) and conical inner surface (15, 35) designed to co-operate with the conical outer surface (13, 33) of the inner bolt portion (11, 31) and having the same cone angle,
and with a clamping screw (22, 26) engaging in the bore (12, 32) from one end of the conical clamping bolt (10, 20, 30) and having a head for abutting against the adjacent end of one of the bolt portions, by means of which the bolt portions (11, 14; 31, 34) are axially displaceable relative to one another with sliding of the conical surfaces (12, 15; 33, 35) with radial expansion of the outer bolt portion (11, 34),
**characterised in that,**
the outer bolt portion (14, 34) has a radial peripheral projection (17) at the end where the head (21, 27) of the clamping screw (22, 26) is present, the projection engaging axially against the outside of the second component (2), whilst the other end of the outer bolt portion (14, 34) is continuously cylindrical with a diameter matching the diameter of the bore in the first component (1) which is in the form of a blind bore (5), and a co-axial screw-threaded bore (7) of smaller diameter being provided in the base (8) of the bore (5) for a screw (24, 26) which can be inserted through the bore (12, 32) in the inner bolt portion.

2. Assembly of components according to claim 1, **characterised in that**,
the peripheral projection (17) is arranged on the end of the outer bolt portion (14) having the smaller diameter of the conical inner surface (13) and engages the clamping screw (22) for clamping axially from outside against the peripheral projection (17).
that for release there is provided a releasing screw (24) having a head (23) and being of smaller diameter than the clamping screw (22) and the screw-threaded bore (7) in the base of the blind bore (5) is designed for the releasing screw (24)
and that the releasing screw (24) abuts axially from outside against the face of the inner bolt portion (11).

3. Assembly of components according to claim 2, **characterised in that**, there is provided an auxiliary ring (25) engaging in the end of the bush-shaped outer bolt portion (14) having the smaller diameter of the conical inner surface (15), against which ring the releasing screw (24) engages axially from outside with its head (23).

4. Assembly of components according to claim 1, **characterised in that,** the outer bolt portion (34) carries a radial circumferential projection (17) on the end having the larger diameter of the conical inside surface (35), the projection engaging against the outside of the second component (2),
that for tightening purposes the clamping screw (26) passes through the inner bolt portion (34) in an axial through-going bore and the screw-threaded bore (7) in the base of the blind hole (5) is designed for the clamping screw (26) and the clamping screw (26) abuts with its head (27) against the end face of the inner conical member (31)
and that for releasing purposes there is provided a screw arrangement which includes a screw thread (45, 46) on the inner conical member (31) and a screw portion (44, 47) which abuts axially from outside against the peripheral projection (17).

5. Assembly of components according to claim 4, **characterised in that** the screw arrangement includes an internal screw thread (45) and a releasing screw (44) engaging in it.

6. Assembly of components according to claim 5, **characterised in that** an auxiliary ring (38) having an internal collar (37) is provided at one end, the diameter of the ring just exceeding the outside diameter of the inner bolt portion (31) at its outer end and its inside collar diameter just exceeding the diameter of the shank of the clamping screw.

7. Assembly of components according to claim 4 or 6, **characterised in that** the inner bolt portion (31) is extended axially as far as outside the peripheral projection (17) on the outer bolt portion (34) and the screw arrangement includes an external screw-thread (46) provided there with a nut (47) which abuts axially from outside against the peripheral projection (17).

8. Assembly of components according to one of claims 1 to 7, **characterised in that** the outer bolt portion (14, 34) has on its outer periphery an external screw-thread (28) which engages in an internal screw-thread in the blind bore (5) in the first component (1).

9. Assembly of components according to one of claims 1 to 8, **characterised in that** a pot-shaped protective cap (40) is provided, tightly enclosing the parts of the conical clamping bolt (10, 20, 30) which project axially beyond the peripheral projection (17) and capable of being secured at its rim by means of a snap connection with the conical clamping bolt (10, 20, 30).

## Revendications

1. Groupe de composants comprenant :
- un premier composant (1), un deuxième composant (2) et un goujon conique de serrage (10, 20, 30) en prise dans des alésages alignés (5, 6) des composants (1, 2) dont il assure la liaison sans jeu,
- une partie interne (11, 31) du goujon traversée par un alésage central (12, 32) et présentant, concentriquement à cet alésage, une portée périphérique externe (12, 33) conique dont l'angle de cône est situé dans la plage d'autoserrage,
- une partie externe (14, 34) du goujon en forme de douille délimitée par une surface périphérique externe (16, 36) de diamètre adapté aux alésages (5, 6) et par une portée périphérique interne (15, 35) conique ayant le même angle de cône, conçue pour coopérer avec la portée périphérique externe conique (13, 33) de la pièce interne de goujon,
- une vis de serrage (22, 26) engagée dans l'alésage de passage (12, 32) en partant d'une extrémité du goujon de serrage (10, 20, 30) et comportant une tête venant en appui sur l'extrémité proche d'une des parties du goujon de manière à pouvoir déplacer ces parties (11, 14, 31, 34) l'une par rapport à l'autre par glissement axial sur les portées coniques (13, 15 ; 33, 35), avec expansion radiale de la partie externe (11, 34) du goujon,
caractérisé en ce que
la partie externe (14, 34) du goujon présente, du côté de la tête (21, 27) de la vis de serrage (22, 26), une saillie périphérique radiale (17), en appui axial sur la surface externe du deuxième composant (2), tandis que l'autre extrémité de la partie externe de goujon (14, 34) est un cylindre continu logé dans le premier composant (1) et de diamètre correspondant à celui de l'alésage (5), borgne, prévu dans ce premier composant (1), un alésage fileté coaxial (7) étant prévu au fond (8) de l'alésage (5) avec un diamètre plus faible pour recevoir une vis (24, 26) passant à l'intérieur de l'alésage (12, 32) de la partie interne du goujon.

2. Groupe de composants selon la revendication 1,
caractérisé en ce que
- la saillie périphérique (17) est montée sur l'extrémité de la partie externe (14) du goujon correspondant au plus faible diamètre de la partie interne conique (13), la vis de serrage (22) s'appuyant pour serrer de l'extérieur sur la saillie (17),
- pour dégager, il est prévu une vis (24) ayant une tête et présentant un diamètre inférieur à celui de la vis de serrage (22), l'alésage fileté (7) situé au fond de l'alésage borgne (5) étant conçu pour recevoir la vis de dégagement (24),
- la vis de dégagement (24) s'appuie axialement de l'extérieur sur la face frontale de la partie interne (11) du goujon.

3. Groupe de composants selon la revendication 2,
caractérisé en ce qu'
il est prévu une bague auxiliaire (25) située devant la face frontale de la partie interne (14) du goujon et en prise avec l'extrémité de la partie externe (14) du goujon correspondant au plus faible diamètre de la portée périphérique conique interne (15), la vis de dégagement (24) s'appuyant axialement à l'extérieur par sa tête (23) sur cette bague.

4. Groupe de composants selon la revendication 1,
caractérisé en ce que
- la partie externe (34) du goujon présente, à son extrémité correspondant au plus grand diamètre de la partie conique interne (35), une saillie périphérique radiale (17) en appui sur la face externe du deuxième composant (2),
- pour agir, la vis de serrage (26) traverse la partie interne (31) du goujon à l'intérieur d'un alésage axial de passage tandis que l'alésage fileté (7) situé au fond de l'alésage borgne (5) est conçu pour recevoir la vis de serrage (26) qui s'appuie par sa tête (27) sur la face frontale de la partie interne conique (31),
- pour dégager, il est prévu un dispositif à vis comprenant un filetage (45, 46) sur la partie interne conique (31) et une pièce filetée (44, 47) qui s'appuie axialement de l'extérieur sur la saillie périphérique (17).

5. Groupe de composants selon la revendication 4,
caractérisé en ce que
le dispositif à vis comprend un filetage interne (45) et une vis de dégagement (44) en prise dans ce filetage.

6. Groupe de composants selon la revendication 5,
caractérisé en ce qu'
il est prévu une bague auxiliaire (38) présentant à une extrémité un collet interne (37) dont le diamètre de la partie annulaire dépasse à peine le diamètre externe de la partie interne (31) du goujon au niveau de son extrémité externe tandis que le diamètre interne de collet dépasse à peine le diamètre de la tige de la vis de serrage.

7. Groupe de composants selon la revendication 4 ou 6,
caractérisé en ce que
la partie interne (31) du goujon se prolonge jusqu'à l'extérieur de la saillie périphérique (17) de la partie externe (34) du goujon tandis que le dispositif à vis comprend à cet endroit un filetage externe (46) portant un écrou (47) en appui axial de l'extérieur sur la saillie périphérique (17).

8. Groupe de composants selon une des revendications 1 à 7,
caractérisé en ce que
la partie externe (14, 34) du goujon porte sur sa périphérie un filetage externe (28), en prise avec le filetage interne de l'alésage borgne (5) situé dans le premier composant (1).

9. Groupe de composants selon une des revendications 1 à 8,
caractérisé en ce qu'
il est prévu un capot de protection (40) en forme de boîte, recouvrant étroitement les parties coniques de serrage (10, 20, 30) du goujon conique dépassant axialement la saillie périphérique (17), ce capot étant fixé le long de son bord sur le goujon conique de serrage (10, 20, 30) par une liaison à encliquetage.
